# EUROPEAN PATENT APPLICATION

(11) **EP 2 730 764 A1**
(43) Date of publication of application: **14.05.2014**
(21) Application number: 12811982.3
(22) Date of filing: 23.05.2012
(51) Int. Cl.: F01N 13/08, F01N 13/20, F16L 27/12

(54) **PIPE JOINT STRUCTURE FOR EXHAUST GAS PROCESSING DEVICE FOR INDUSTRIAL VEHICLE**

(30) Priority: 09.07.2011 JP 2011152390
(71) Applicant: Unicarriers Corporation, Tokyo 140-0013 (JP)
(72) Inventor: SHIIZAKI, Kouji, Ohmihachiman-shi Shiga 5230013 (JP)
(74) Representative: Whitlock, Holly Elizabeth Ann
(86) International application number: PCT/JP2012/063835
(87) International publication number: WO 2013/008548

(57) **Abstract**

A pipe joint structure for an exhaust gas treatment device for an industrial vehicle that can absorb an external force and that can facilitate a fine adjustment of a gap formed at the pipe joint part for introducing the outside air into the pipe joint part. A diesel particulate filter (or an exhaust gas treatment device) 1 is provided with an exhaust pipe 5. A tapered distal end portion 5a of the exhaust pipe 5 is inserted into an opening portion 4a of the tail pipe 4 and a gap is formed of a tapered cross sectional shape between the distal end portion 5a of the exhaust pipe 5 and the opening portion 4a of the tail pipe 4. The exhaust pipe 5 has first bracket members 11, 11' and the tail pipe 4 has a second bracket member 12. Attachment bolts 13, 13' are inserted through the first bracket members 11, 11' and the second bracket member 12. Coil springs 15, 15' are fitted around the outer peripheries of the attachment bolts 13, 13' between the first bracket members 11, 11' and the second bracket member 12. The distal end portion 5a of the exhaust pipe 5 is elastically supported relative to the opening portion 4a of the tail pipe 4 in the longitudinal direction of the pipe.

## Description

### TECHNICAL FIELD

The present invention relates generally to a pipe joint structure for an exhaust gas treatment device for an industrial vehicle, and more particularly to such an improved pipe joint structure that can absorb an external force with a gap for introducing the outside air into a pipe joint part formed and that can facilitate a fine adjustment of the gap.

### BACKGROUND ART

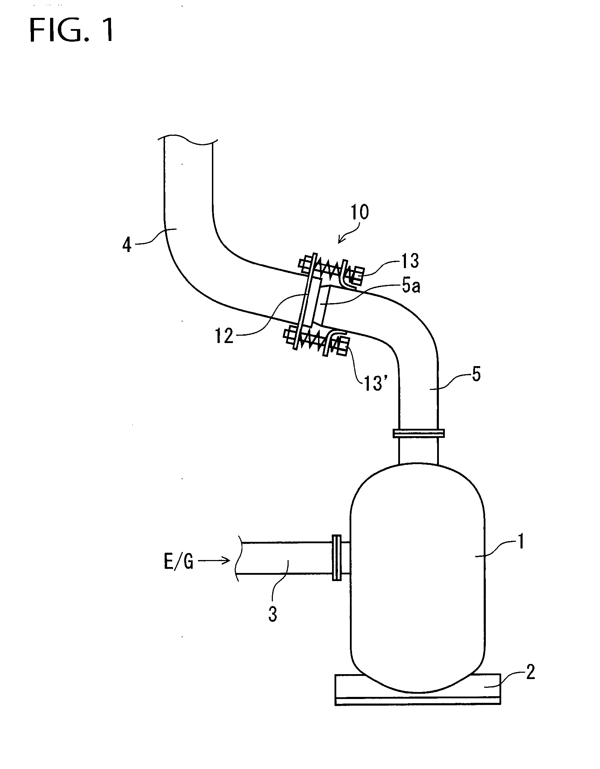

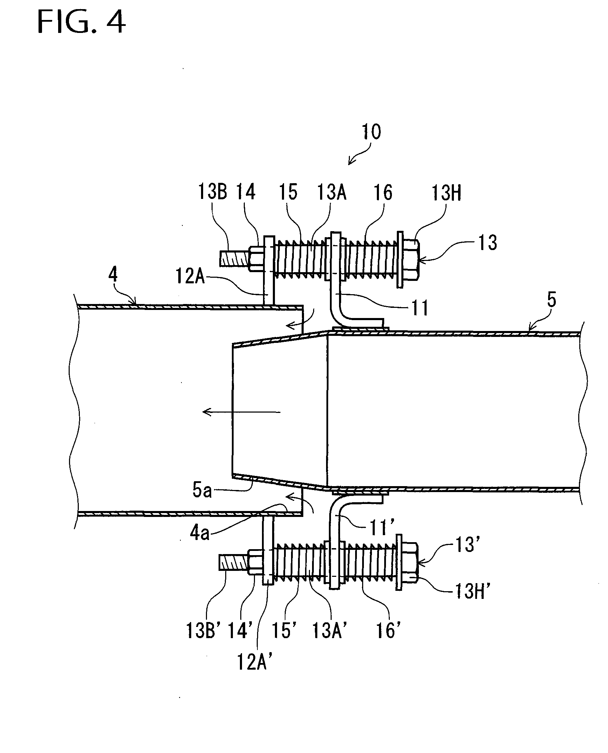

In an exhaust gas device for an industrial vehicle, such a structure is known in the art that there is formed a gap between a distal end of a discharge side of a muffler and a tail pipe into which the distal end of the discharge side of the muffler is inserted and at the time of discharging exhaust gas from the muffler the outside air is sucked to be introduced into the tail pipe through the gap by generating a Venturi effect (see figure 1 of utility model registration application publication No. 1992-83826 and figure 4 of patent application publication No. 2000-34742).

On the other hand, industrial vehicle manufacturers are required to install an exhaust gas treatment device such as a diesel particulate filter in an engine exhaust system for collecting particulate matter (PM) included in emissions of a diesel engine and removing it from the emissions so that the industrial vehicles can adapt for the fourth emission regulation.

Particulate matter collected by the diesel particulate filter can be burnt using high temperature exhaust gas introduced into the diesel particulate filter but at this juncture the exhaust gas temperature becomes extremely high (approximately 600°C). It is thus considered to apply an outside air introduction structure by Venturi effect, which has been utilized in a prior-art exhaust gas device, to an exhaust part of this diesel particulate filter as well to decrease the exhaust gas temperature.

Recently, in the light of facilitating maintenance, a tail pipe is directed upward from an engine, an openable/closable cover is provided to cover an engine room from above, and a lower end of the tail pipe is fitted to the cover. In this case, the problem arises that opening/closing work of the cover is hard to be accomplished. Therefore, it is also considered to fix the tail pipe to a member (e.g. a head guard) on a vehicle body side to facilitate opening/closing work of the cover. However, in such a case, since oscillatory system is different between a diesel particulate filter side in the engine room and the vehicle body side, especially when an exhaust pipe of the diesel particulate filter is fixedly attached to the tail pipe via welding and the like, a connecting part is possibly damaged through oscillation.

The present invention has been made in view of these circumstances and its object is to provide a pipe joint structure for an exhaust gas treatment device for an industrial vehicle that can decrease exhaust gas temperature, that can absorb an external force with a gap formed at a pipe joint part, and that can facilitate a fine adjustment of the gap.

### DISCLOSURE OF INVENTION

In a pipe joint structure for an exhaust gas treatment device for an industrial vehicle according to the present invention, as recited in the invention claimed in claim 1, the exhaust gas treatment device is provided with an exhaust pipe, a distal end portion of the exhaust pipe is inserted into an opening portion of a tail pipe, and the exhaust pipe is elastically supported in a longitudinal direction of the tail pipe such that the exhaust pipe forms a gap of a tapered cross sectional shape relative to the opening portion of the tail pipe.

According to the present invention, since the distal end portion of the exhaust pipe of the exhaust gas treatment device is inserted into the opening portion of the tail pipe and the gap is formed between the distal end portion of the exhaust pipe and the opening portion of the tail pipe, when discharging exhaust gas from the exhaust gas treatment device into the exhaust pipe, the outside air is led into the tail pipe by generating a Venturi effect thus decreasing the exhaust gas temperature. Also, in this case, since the distal end portion of the exhaust pipe is elastically supported relative to the opening portion of the tail pipe in the longitudinal direction of the tail pipe, an external force imparted to a pipe joint part can be absorbed with a gap formed at the pipe joint part. As a result, even in the event that an exhaust pipe side and a tail pipe side have respective different oscillation systems, it is possible to prevent the distal end portion of the exhaust pipe and the opening portion of the tail pipe from being damaged through oscillation.

Moreover, according to the present invention, the extent of an overlap between the distal end portion of the exhaust pipe and the opening portion of the tail pipe can be varied because the exhaust pipe is elastically supported relative to the tail pipe in the longitudinal direction of the tail pipe. Thereby, in association with a tapered gap in cross section formed between the distal end portion of the exhaust pipe and the opening portion of the tail pipe, the gap between the distal end portion of the exhaust pipe and the opening portion of the tail pipe can be easily adjusted and the amount of the outside air introduced into the tail pipe can be regulated with ease.

The exhaust pipe of the exhaust gas treatment device may have a first bracket member, the tail pipe may have a second bracket member, an attachment bolt may be inserted through the first bracket member and the second bracket member, and a first elastic member may be provided around an outer periphery of the attachment bolt between the first bracket member and the second bracket member, as recited in the invention claimed in claim 2.

In this case, the distal end portion of the exhaust pipe is elastically supported relative to the opening portion of the tail pipe in the longitudinal direction of the tail pipe with the first elastic member sandwiched between the first bracket member and the second bracket member.

The first elastic member may be formed of a coil spring, as recited in the invention claimed in claim 3.

A head part of the attachment bolt may be located away from the first bracket member and a second elastic member is provided around the outer periphery of the attachment bolt between the head part of the attachment bolt and the first bracket member, as recited in the invention claimed in claim 4.

In this case, since the second elastic member is provided in addition to the first elastic member, the supporting rigidity of elastic support between the exhaust pipe and the tail pipe can be enhanced and the exhaust pipe can be elastically supported relative to the tail pipe in both the forward direction and the rearward direction of the longitudinal direction of the tail pipe, thus further improving flexibility relative to the external force.

The second elastic member may formed of a coil spring, as recited in the in the invention claimed in claim 5.

The first bracket member and the second bracket member may project in a radial direction, as recited in the invention claimed in claim 6.

The first bracket member may be provided not along the whole circumference of the exhaust pipe but on a part of a circumference of the exhaust pipe, as recited in the invention claimed in claim 7.

In this case, at the time of introducing the outside air into the tail pipe, the first bracket member can be prevented from obstructing the flow of the outside air.

The attachment bolt may be provided not along the whole circumference of the first bracket member and the second bracket member but at two positions of a circumference of each of the first bracket member and the second bracket member, as recited in the invention claimed in claim 8.

In this case, when the external force is applied to the pipe joint part, an inclination of an axis (i.e. angular displacement) of the exhaust pipe relative to the tail pipe can be permitted not only in the vertical and horizontal planes but also in multiple planes.

The distal end portion of the exhaust pipe may have a tapered shape whose diameter becomes gradually small toward a tip end thereof, as recited in the invention claimed in claim 9.

In this case, there is formed a tapered gap between the distal end portion of the exhaust pipe and the opening portion of the tail pipe.

The tail pipe may be fixed to an industrial vehicle body side, as recited in the invention claimed in claim 10.

In this case as well, since the distal end portion of the exhaust pipe is elastically supported relative to the opening portion of the tail pipe in the longitudinal direction of the tail pipe, the external force imparted to the pipe joint part can be absorbed and the distal end portion of the exhaust pipe and the opening portion of the tail pipe can be prevented from being damaged through oscillation.

The exhaust gas treatment device may be a diesel particulate filter, as recited in the invention claimed in claim 11.

In the case of the diesel particulate filter, particulate matter that has been collected is burnt by high temperature exhaust gas introduced into the diesel particulate filter, but at this juncture exhaust gas temperature becomes extremely high (approximately 600°C). Therefore, by forming a gap between the distal end portion of the exhaust pipe of the diesel particulate filter and the opening portion of the tail pipe as in the present invention, the outside air can be led into the tail pipe at the time of discharging exhaust gas into the exhaust pipe, thus effectively decreasing the exhaust gas temperature.

As above-mentioned, according to the present invention, since the distal end portion of the exhaust pipe of the exhaust gas treatment device is inserted into the opening portion of the tail pipe and a gap is formed between the distal end portion of the exhaust pipe and the opening portion of the tail pipe, when discharging exhaust gas from the exhaust gas treatment device into the exhaust pipe, the outside air is introduced into the tail pipe by generating a Venturi effect thus decreasing the exhaust gas temperature. Also, in this case, since the distal end portion of the exhaust pipe is elastically supported relative to the opening portion of the tail pipe in the longitudinal direction of the tail pipe, the external force imparted to the pipe joint part can be absorbed with the gap formed at the pipe joint part. As a result, even in the event that the exhaust pipe side and the tail pipe side have respective different oscillation systems, it is possible to prevent the distal end portion of the exhaust pipe and the opening portion of the tail pipe from being damaged through oscillation.

Moreover, according to the present invention, the extent of an overlap between the distal end portion of the exhaust pipe and the opening portion of the tail pipe can be varied because the exhaust pipe is elastically supported relative to the tail pipe in the longitudinal direction of the tail pipe. Thereby, in association with a tapered gap of a cross sectional shape formed between the distal end portion of the exhaust pipe and the opening portion of the tail pipe, the gap between the distal end portion of the exhaust pipe and the opening portion of the tail pipe can be easily adjusted and the amount of the outside air introduced into the tail pipe can be regulated with ease.

### BRIEF DESCRIPTION OF DRAWINGS

FIG. 1 is a side schematic view of a diesel particulate filter and its peripheral part for an industrial vehicle employing a pipe joint structure according to an embodiment of the present invention;
Fig. 2 is an enlarged perspective view of the pipe joint structure of FIG. 1;
FIG. 3 is an enlarged side view of the pipe joint structure of FIG. 1;
Fig. 4 is a longitudinal sectional view of FIG. 3;
Fig. 5 is a side schematic view of the pipe joint structure illustrating the state that the pipe joint structure is offset vertically; and
FIG. 6 is a top plan schematic view of the pipe joint structure illustrating the state that the pipe joint structure is offset sideways.

### BEST MODE FOR CARRYING OUT THE INVENTION

Embodiments of the present invention will be hereinafter described in accordance with the appended drawings.

FIG. 1 illustrates a diesel particulate filter for a forklift employing a pipe joint structure according to an embodiment of the present invention. As shown in FIG. 1, the diesel particulate filter 1 is installed in an engine room through a frame 2. The diesel particulate filter 1 is a device that collects particulate matter (PM) included in exhaust gas of a diesel engine and that removes it from exhaust gas. The exhaust gas led-in side of the diesel particulate filter 1 is connected to an exhaust pipe 3 into which exhaust gas discharged from the engine is introduced, and the exhaust gas led-out side of the diesel particulate filter 1 is connected to an exhaust pipe 5 extending toward a tail pipe 4. The tail pipe 4 extends upwardly. Between the exhaust pipe 5 and the tail pipe 4 is provided a pipe joint structure 10 according to the present embodiment.

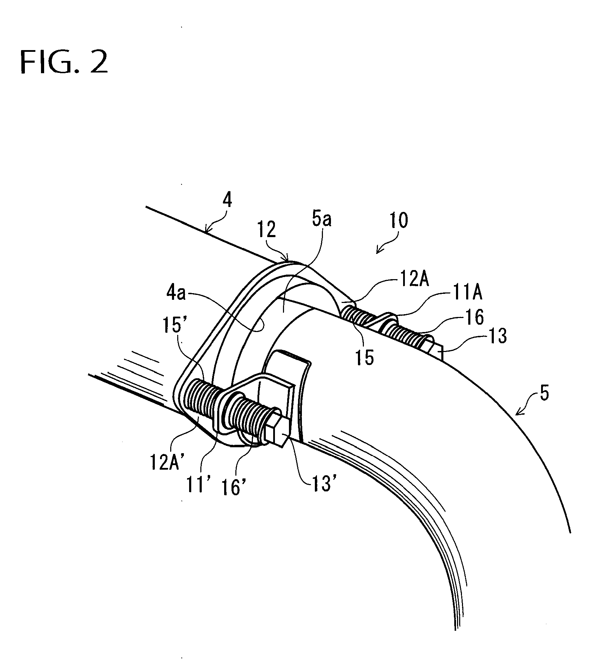

As shown in FIGS. 2 to 4, a distal end portion 5a of the exhaust pipe 5 of the diesel particulate filter 1 is inserted into an opening portion 4a of the tail pipe 4. In such a structure, the distal end portion 5a of the exhaust pipe 5 forms a gap of a tapered cross sectional shape relative to the opening portion 4a of the tail pipe 4 (see FIG. 4).

On an outer circumference of the exhaust pipe 5 in the vicinity of the distal end portion 5a, first bracket members 11, 11' are attached. Each of the first bracket members 11, 11' is an L-shaped metal fitting a part of which protrudes radially outwardly. In this example, the first bracket members 11, 11' are disposed at two positions located 180 degrees circumferentially apart from each other.

On the other hand, on an outer circumference of the tail pipe 4 in the vicinity of the opening portion 4a, a second bracket member 12 is attached. In this example, the second bracket member 12 extends along the whole periphery of an outer circumference of the tail pipe 4 and has respective flanged portions 12A, 12A' that protrude radially outwardly at positions facing the first bracket members 11, 11'.

An attachment bolt 13 is inserted through the first bracket member 11 and the flanged portion 12A, and an attachment bolt 13' is inserted through the first bracket member 11' and the flanged portion 12A'. The attachment bolts 13, 13' are stepped bolts whose larger diametric portions 13A, 13A' are inserted through respective through holes that are formed in the first bracket members 11, 11' respectively and whose smaller diametric portions 13B, 13B' are inserted through respective through holes that are formed in the flanged portions 12A, 12A' respectively. The smaller diametric portions 13B, 13B' are formed with male screw parts, which are screwed into nuts 14, 14' respectively. Also, head portions 13H, 13H' of the attachment bolts 13, 13' are disposed away from the first bracket members 11, 11' respectively.

A first coil spring 15 is fitted around an outer periphery of the larger diametric portion 13A of the attachment bolt 13 between the first bracket member 11 and the flanged portion 12A. Similarly, a first coil spring 15' is fitted around an outer periphery of the larger diametric portion 13A' of the attachment bolt 13' between the first bracket member 11' and the flanged portion 12A'.

Also, a second coil spring 16 is fitted around the outer periphery of the larger diametric portion 13A of the attachment bolt 13 between the head portion 13H of the attachment bolt 13 and the first bracket member 11. Similarly, a second coil spring 16' is fitted around the outer periphery of the larger diametric portion 13A' of the attachment bolt 13' between the head portion 13H' of the attachment bolt 13' and the first bracket member 11.

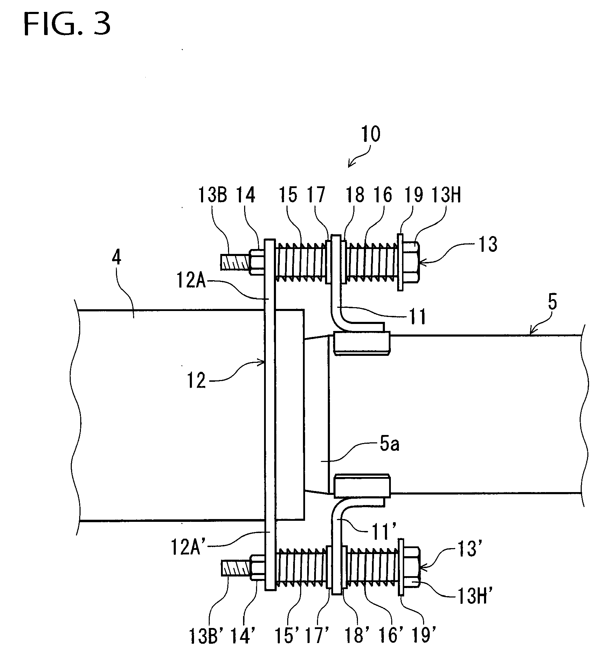

The larger diametric portion 13A of the attachment bolt 13 has washers 17, 18 around the outer periphery thereof on opposite sides of the first bracket members 11 and the head portion 13H of the attachment bolt 13 has a washer 19 (see FIG. 3). Likewise, the larger diametric portion 13A' of the attachment bolt 13' has washers 17', 18' around the outer periphery thereof on opposite sides of the first bracket members 11' and the head portion 13H' of the attachment bolt 13' has a washer 19' (see FIG. 3).

An end of the first coil spring 15 presses against the flanged portion 12A and the other end of the first coil spring 15 presses against the washer 17. Similarly, an end of the first coil spring 15' presses against the flanged portion 12A' and the other end of the first coil spring 15' presses against the washer 17'. Also, an end of the second coil spring 16 presses against the washer 18 and the other end of the second coil spring 16 presses against the washer 19. Similarly, an end of the second coil spring 16' presses against the washer 18' and the other end of the second coil spring 16' presses against the washer 19'.

In the above-mentioned structure, the exhaust pipe 5 is elastically supported relative to the opening portion 4a of the tail pipe 4 in the longitudinal direction of the tail pipe 4.

According to the present embodiment, since the distal end portion 5a of the exhaust pipe 5 of the diesel particulate filter 1 is inserted into the opening portion 4a of the tail pipe 4 and there is formed a gap between the distal end portion 5a of the exhaust pipe 5 and the opening portion 4a of the tail pipe 4 (see FIG. 4), when discharging exhaust gas from the exhaust pipe 5 of the diesel particulate filter 1 into the tail pipe 4, the outside air is led into the tail pipe 4 by generating a Venturi effect (see arrow marks in FIG. 4), thus decreasing exhaust gas temperature.

In the diesel particulate filter, particulate matter that has been collected is burnt by high temperature exhaust gas introduced in the diesel particulate filter. At this juncture, exhaust gas temperature becomes extremely high (approximately 600°C). However, in the present embodiment, since there is formed a gap between the distal end portion 5a of the exhaust pipe 5 of the diesel particulate filter 1 and the opening portion 4a of the tail pipe 4, the outside air can be led into the tail pipe 4 at the time of exhausting from the exhaust pipe 5 to the tail pipe 4, thereby effectively reducing exhaust gas temperature.

Also, in this case, since the distal end portion 5a of the exhaust pipe 5 has a tapered shape (i.e. a nozzle-like shape) whose diameter becomes gradually small toward a tip end of the distal end portion 5a, negative pressure at the pipe joint part can be increased at the time of exhausting from the exhaust pipe 5, thus increasing the amount of introduction of the outside air into the tail pipe 4.

Moreover, in this case, since the first bracket members 11, 11' attached on the outer periphery of the exhaust pipe 5 are provided not along the whole circumference of the exhaust pipe 5 but at a part of a circumference of the exhaust pipe 5, the gap between the distal end portion 5a of the exhaust pipe 5 and the opening portion 4a of the tail pipe 4 is not closed by the first bracket members 11, 11' (see FIG. 2), and flow of the outside air into the opening portion 4a of the tail pipe 4 can thus be secured.

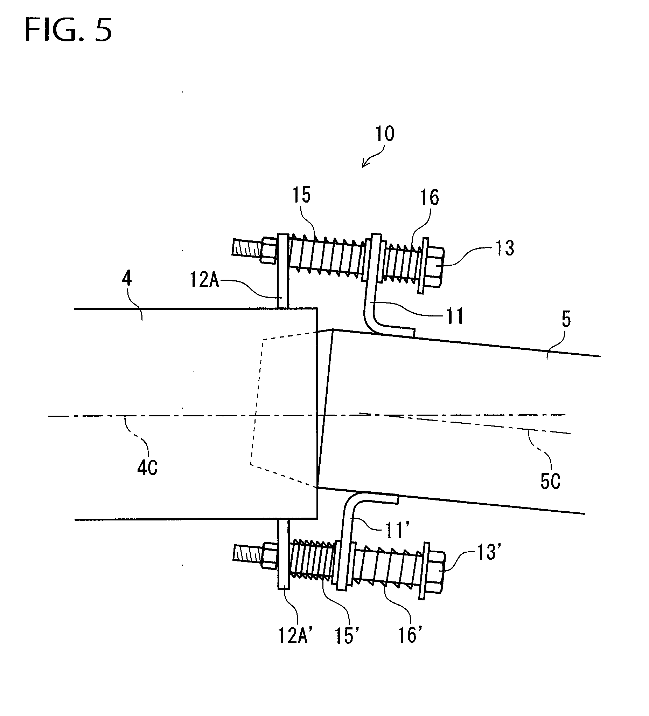

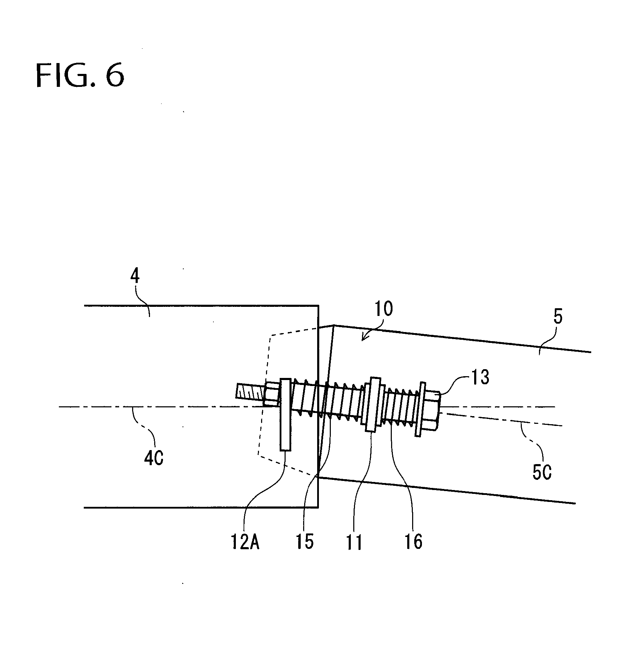

Furthermore, in this case, since the distal end portion 5a of the exhaust pipe 5 is elastically supported relative to the opening portion 4a of the tail pipe 4 in the longitudinal direction of the tail pipe 4, the external force acted on the pipe joint part can be absorbed with the gap formed at the pipe joint part. That will be explained using FIGS. 5 and 6.

FIG. 5 is a side schematic view of the pipe joint structure 10 viewed from the side thereof. FIG. 6 is a top plan view of the pipe joint structure 10 viewed from the top thereof. FIG. 5 illustrates the state that an axis 5C of the exhaust pipe 5 inclines downwardly by the action of the external force and is vertically offset relative to an axis 4C of the tail pipe 4. FIG. 6 illustrates the state that an axis 5C of the exhaust pipe 5 inclines sideways by the action of the external force and is offset to the left/right (i.e. angular-displaced ) relative to an axis 4C of the tail pipe 4.

Since the first bracket members 11, 11' attached on the exhaust pipe 5 are elastically supported by elastic resilience of the first and second coil springs 15, 16; 15', 16' around the attachment bolts 13, 13', even when the axis 5C of the exhaust pipe 5 is displaced in any directions including the vertical direction and the left-right direction relative to the axis 4C of the tail pipe 4 as shown in FIGS. 5 and 6, such displacement can be absorbed by expansion and retraction of each of the springs. As a result, even in the case that an exhaust pipe side and a tail pipe side have different oscillation systems due to the fact that the tail pipe 4 is fixedly attached to the vehicle body side, the distal end portion 5a of the exhaust pipe 5 and the opening portion 4a of the tail pipe 4 are capable of avoiding fracture due to oscillation.

Also, in this case, since there are provided the second coil springs 16, 16' in addition to the first coil springs 15, 15', supporting rigidity in an elastic support between the exhaust pipe 5 and the tail pipe 4 can be enhanced and besides the exhaust pipe 5 can be elastically supported relative to the tail pipe 4 in both the forward direction and the rearward direction of the longitudinal direction of the tail pipe 4, thus further improving flexibility relative to the external force.

Moreover, according to the present embodiment, the exhaust pipe 5 is elastically supported relative to the tail pipe 4 in the longitudinal direction of the tail pipe 4 at a position where elastic resilience of the first coil springs 15, 15' balances elastic resilience of the second coil springs 16, 16' respectively. Therefore, by properly adjusting each spring force of the first and second coil springs 15, 16; 15', 16', the extent of an overlap between the distal end portion 5a of the exhaust pipe 5 and the opening portion 4a of the tail pipe 4 can be varied. As a result of this, in association with the fact that the gap formed between the distal end portion 5a of the exhaust pipe 5 and the opening portion 4a of the tail pipe 4 has a tapered cross sectional shape, the gap between the distal end portion 5a of the exhaust pipe 5 and the opening portion 4a of the tail pipe 4 can be easily adjusted and the amount of the outside air introduced into the tail pipe 4 can be regulated with ease.

Here, Japanese patent application publication Nos. 2000-291862 and 2002-267062 disclose a structure where in the pipe joint that couples the first conduit to the second conduit the annular seal ring is interposed between the mating faces of the first conduit and the second conduit and the spring force of the coil spring biases the first conduit toward the second conduit side such that the annular seal ring is pressed against the mating faces of the first and second conduits (see FIG. 2 of each of the publications). However, those cases aim to prevent liquid leakage from the mating faces by causing the mating faces of the first and second conduits to adhere to each other in the airtight state through the annular seal ring, and they are thus entirely different from the present invention in the object and constitution that aims to absorb the external force acted on the pipe joint part with an adjustable gap for introduction of the outside air formed between pipes to be connected by supporting a pipe elastically relative to the other pipe in the longitudinal direction of the pipe.

In addition, the exhaust gas treatment device that the pipe joint structure of the present invention can be applied to is not limited to the above-mentioned diesel particulate filter, but other treatment devices as well are applicable.

The pipe joint structure according to the present invention also has application to other industrial vehicles other than a forklift.

### INDUSTRIAL APPLICABILITY

The present invention is suitable to an exhaust gas treatment device for an industrial vehicle such as a diesel particulate filter and the like, and especially to a device that requires absorption of an external force imparted to a pipe joint part with a gap.

## Claims

1. A pipe joint structure for an exhaust gas treatment device for an industrial vehicle,
wherein said exhaust gas treatment device includes an exhaust pipe and a distal end portion of said exhaust pipe is inserted into an opening portion of a tail pipe; and
wherein said distal end portion of said exhaust pipe forms a gap of a tapered cross sectional shape relative to the opening portion of said tail pipe and is elastically supported relative to the opening portion of said tail pipe in a longitudinal direction of said tail pipe.

2. The pipe joint structure according to claim 1, wherein said exhaust pipe has a first bracket member, said tail pipe has a second bracket member, an attachment bolt is inserted through said first bracket member and said second bracket member, and a first elastic member is provided around an outer periphery of said attachment bolt between said first bracket member and said second bracket member.

3. The pipe joint structure according to claim 2, wherein said first elastic member is a coil spring.

4. The pipe joint structure according to claim 2, wherein a head part of said attachment bolt is located away from said first bracket member, and a second elastic member is provided around the outer periphery of said attachment bolt between said head part of said attachment bolt and said first bracket member.

5. The pipe joint structure according to claim 4, wherein said second elastic member is a coil spring.

6. The pipe joint structure according to claim 2, wherein said first bracket member and said second bracket member project in a radial direction.

7. The pipe joint structure according to claim 6, wherein said first bracket member is provided on a part of a circumference of said exhaust pipe.

8. The pipe joint structure according to claim 2, wherein said attachment bolt is provided at two positions of a circumference of each of said first bracket member and said second bracket member.

9. The pipe joint structure according to claim 1, wherein said distal end portion of said exhaust pipe has a tapered shape whose diameter becomes gradually small toward a tip end thereof.

10. The pipe joint structure according to claim 1, wherein said tail pipe is fixed to an industrial vehicle body side.

11. The pipe joint structure according to claim 1, wherein said exhaust gas treatment device is a diesel particulate filter.
